# DEMANDE DE BREVET EUROPEEN

(11) **EP 3 020 460 A1**
(43) Date de publication de la demande: **18.05.2016**
(21) Numéro de dépôt: 15193232.4
(22) Date de dépôt: 05.11.2015
(51) Int. Cl.: A63H 27/00, A63H 30/04, G05D 1/00

(54) **EQUIPEMENT DE TÉLÉCOMMANDE DE DRONE À LONGUE PORTÉE**

(30) Priorité: 12.11.2014 FR 1460876
(71) Demandeur: Parrot, 75010 Paris (FR)
(72) Inventeur: SEYDOUX, Henri, 75017 PARIS (FR); FERRAND, Arsène, 75010 PARIS (FR); BRULEZ, Nicolas, 75010 PARIS (FR)
(74) Mandataire: Dupuis-Latour, Dominique

(57) **Abrégé**

Cet ensemble met en oeuvre une console de télécommande (20) supportant une tablette (18). La console comprend un module E/R (48) interfacé avec un module E/R (50) de la tablette pour constituer un premier réseau local WiFi, qui est un réseau standard à courte portée. La console comprend un autre module E/R spécifique (54), interfacé avec un module E/R (58) du drone (10) pour constituer un second réseau local WiFi, qui est un réseau optimisé à longue portée, les deux réseaux opérant sur des canaux non partagés. Un module de routage bidirectionnel (78) assure l'interfaçage entre les deux réseaux WiFi, pour permettre l'échange des données de façon transparente entre le drone (10) et la tablette (18), ainsi qu'avec des manettes et boutons de la console (64, 66) ou avec un périphérique (80) branché sur celle-ci.

## Description

L'invention concerne l'échange de données et le pilotage à distance d'appareils motorisés, ci-après désignés généralement sous la dénomination de "drones".

Il peut s'agir de drones volants, notamment de drones à voilure tournante tels que des hélicoptères, quadricoptères et analogues. Mais l'invention n'est toutefois pas limitée au pilotage et à l'échange de données avec des appareils volants ; elle s'applique aussi bien à des appareils roulants évoluant sur le sol sous le contrôle d'un opérateur distant, le terme de "drone" devant être entendu dans son acception la plus générale.

Un exemple typique de drone volant est le *AR.Drone 2.0* ou le *Bebop* (marques déposées) de Parrot SA, Paris, France, qui sont des quadricoptères équipés d'une série de capteurs (accéléromètres, gyromètres, altimètre), d'une caméra video frontale captant une image de la scène vers laquelle est dirigé le drone, et d'une caméra de visée verticale captant une image du terrain survolé. Un autre type de drone auquel peut s'appliquer l'invention est le *Jumping Sumo,* également de Parrot SA, qui est un jouet roulant et sauteur télécommandé pourvu de capteurs accélérométriques et gyrométriques et d'une caméra video frontale.

La caméra video frontale est utilisable pour un pilotage "en mode immersif' du drone, c'est-à-dire où l'opérateur se sert de l'image de la caméra de la même façon que s'il se trouvait lui-même à bord du drone. Elle peut également servir à capter des séquences d'images d'une scène vers laquelle se dirige le drone, l'opérateur se servant du drone de la même façon que d'une caméra qui, au lieu d'être tenue à la main, serait portée par le drone. Les images recueillies peuvent être enregistrées, mises en ligne sur des sites web, envoyées à d'autres internautes, partagées sur des réseaux sociaux, etc.

Les WO 2010/061099 A2, EP 2 364 757 A1 et EP 2 450 862 A1 (Parrot) décrivent le principe de pilotage d'un drone par l'intermédiaire d'un téléphone ou tablette multimedia à écran tactile et accéléromètres intégrés, par exemple un *smartphone* de type *iPhone* ou une tablette de type *iPad* (marques déposées).

Dans la suite de la description, on utilisera de façon générale le terme de "tablette" pour désigner cet appareil, mais ce terme ne doit pas être entendu dans son acception étroite ; bien au contraire, elle englobe également les dispositifs fonctionnellement équivalents, notamment tous les dispositifs portables munis au moins d'un écran de visualisation et de moyens d'échange de données sans fil, tels que *smartphone,* baladeur multimédia non muni de fonctions de téléphonie, console de jeu, etc.

La tablette incorpore les divers organes de contrôle nécessaires à la détection des commandes de pilotage et à l'échange bidirectionnel de données via une liaison radio de type réseau local sans fil WiFi (IEEE 802.11) ou Bluetooth directement établie avec le drone. Son écran tactile affiche l'image captée par la caméra frontale du drone, avec en superposition un certain nombre de symboles permettant le contrôle du vol et l'activation de commandes par simple contact du doigt de l'opérateur sur cet écran tactile.

La liaison radio sans fil bidirectionnelle comprend une liaison montante (de la tablette vers le drone) et une liaison descendante (du drone vers la tablette) pour transmettre des trames de données contenant :
- (de la tablette vers le drone) les commandes de pilotage, ci-après simplement désignées "commandes", envoyées à intervalles réguliers et de façon systématique ;
- (du drone vers la tablette) le flux video issu de la caméra ; et
- (du drone vers la tablette) en tant que de besoin, des données de vol établies par le drone ou des indicateurs d'état tels que : niveau des batteries, phase de vol (décollage, stabilisation automatique, posé au sol, etc.), altitude, défaut détecté, etc.

L'invention concerne plus précisément la transmission bidirectionnelle, avec une portée accrue, de ces commandes et données entre le drone et la tablette.

En effet, une télécommande via une liaison radio WiFi directe, comme cela est décrit dans le EP 2 450 862 A1 précité, présente une portée limitée, d'au plus une cinquantaine de mètres, qui correspond à un pilotage d'un drone qui reste en vision directe de l'opérateur.

Si l'on souhaite une portée plus grande, une première solution consiste à utiliser un *range extender* (répéteur) WiFi, qui est un émetteur/récepteur faisant fonction de relai et doté d'un amplificateur de puissance permettant d'augmenter la puissance rayonnée sur le canal radio utilisé entre la tablette et le récepteur. On peut ainsi augmenter la portée jusqu'à plus de 200 mètres.

Cette technique présente toutefois un inconvénient, dû à la très grande variabilité du débit binaire ou *bitrate* de la liaison radio (débit souvent appelé "bande passante"). Ce débit dépend notamment de l'éloignement entre le drone et la tablette, et de la présence ou non d'obstacles susceptibles de plus ou moins perturber la transmission des ondes radio. Lorsque le drone s'éloigne de la tablette, le débit disponible se dégrade rapidement, ce qui va entrainer un conflit entre le flux montant (envoi des commandes) et le flux descendant (essentiellement le flux video).

En effet, un paramètre important à considérer est le besoin très élevé en débit video de la liaison descendante, très supérieur à celui requis pour l'envoi des commandes ou des données de vol. Typiquement, la bande passante video nécessaire est, même après compression des images, de l'ordre de 2,5 à 3 Mbits par seconde (Mbps), à comparer à quelques kilo-bits par seconde (kbps) pour l'envoi des commandes et données de vol, qui ne sont que de simples valeurs numériques. En d'autres termes, la video occupe typiquement plus de 95 % du débit disponible.

De ce fait, la réduction de débit va avoir un impact sur le débit alloué aux commandes par la liaison montante, d'où il va s'ensuivre une dégradation de la qualité de transmission de la liaison montante, avec risque de perte sporadique de trames contenant les commandes produites par la tablette, et pour conséquence un contrôle du drone devenant très difficile.

Pour remédier à cet inconvénient, il est possible de prévoir deux liaisons différentes, l'une pour la video et l'autre pour les commandes et données de vol : dans ce cas, le retour video du drone vers la tablette est opéré par une liaison WiFi avec relai par le répéteur WiFi, tandis que les commandes et les données de vol sont échangées avec un appareil de télécommande dédié (boitier muni de manches à balai, curseurs, boutons, etc.) via une liaison radio adaptée à l'échange des seules commandes et données de vol avec le drone, cette liaison étant distincte de la liaison WiFi de transmission du flux video.

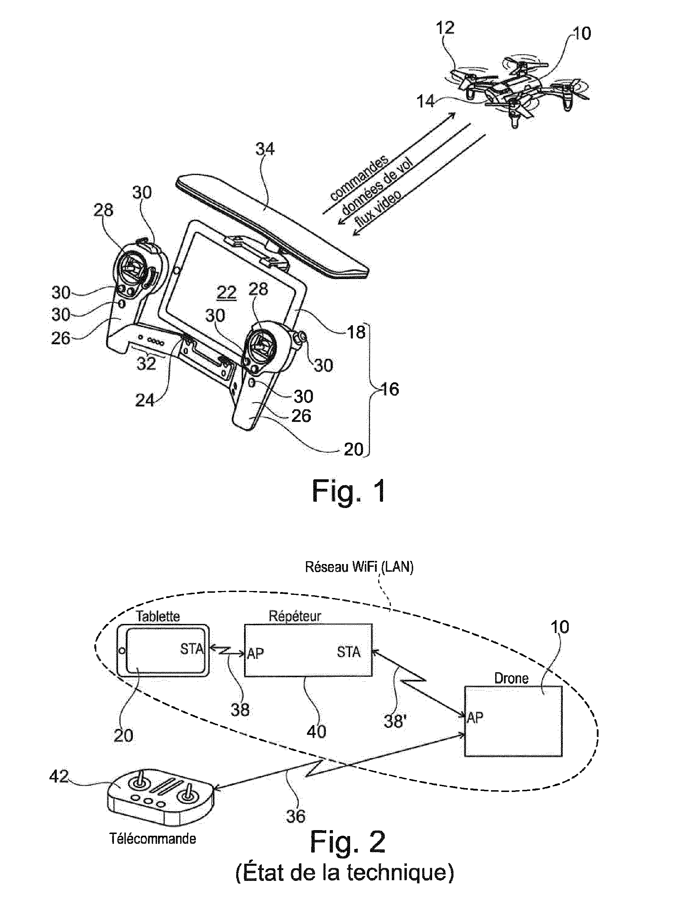

Cette solution (qui sera exposée plus en détail ci-après en référence à la Figure 2) remédie au risque de conflit entre le flux video et le flux des commandes et données de vol. En revanche, elle présente trois inconvénients majeurs :
- l'utilisation d'un répéteur implique un partage temporel du canal entre le drone et la tablette, ce qui limite de chaque côté (tablette/répéteur et répéteur/drone) le débit à 50 % de ce que l'on aurait avec une liaison WiFi directe entre la tablette et le drone ;
- le répéteur étant un équipement de type symétrique, s'il émet un signal puissant en direction du drone, il émettra également un signal puissant en direction de la tablette, avec un risque de saturation puisque cette dernière est bien plus proche du répéteur que le drone ;
- si l'on veut obtenir une portée élevée, il est nécessaire d'utiliser un protocole WiFi non standard, notamment pour tenir compte d'une latence élevée due à l'éloignement. La modification du protocole doit s'appliquer sur toute la liaison, à la fois côté tablette/répéteur et côté répéteur/drone, de sorte que le WiFi qui doit être mis en oeuvre par la tablette ne sera plus un WiFi standard.

Le DE 10 2012 012 462 A1 décrite une configuration comprenant une console de télécommande, une tablette incorporée à la console, et un modèle télécommandé. Chacun de ces trois éléments est muni d'un processeur et d'une interface de communication incorporant notamment un module de communication sans fil de type *Bluetooth.* La configuration peut en outre être complétée par un convertisseur de signal interfacé (sans fil ou par câble) à la console, ainsi qu'à la tablette et au modèle. Ce convertisseur sert de plaque tournante de communication entre ces trois éléments. Le modèle peut ainsi être télécommandé indifféremment à partir de la console ou bien à partir de la tablette, qui joue alors le rôle de télécommande auxiliaire ou de secours par rapport à la télécommande principale que constitue la console. Ainsi, en cas de défaillance de la console ou de la tablette, l'utilisateur dispose toujours d'une télécommande fonctionnelle qui lui permet de ramener le modèle à bon port.

Le but de l'invention est de remédier aux divers inconvénients indiqués plus haut, en proposant une nouvelle architecture de réseau de communication :
- qui assure avec le drone une liaison WiFi optimisée pour une longue distance (avec un protocole robuste, une modulation radio simple, etc.) mais sans partage temporel du canal radio utilisé, afin de pouvoir bénéficier de la totalité du débit potentiel du canal utilisé ;
- qui puisse émettre vers le drone un signal puissant, de manière à pouvoir communiquer avec celui-ci à très longue portée, typiquement jusqu'à 2 km, sans aucun risque de saturation du signal côté tablette ni d'interférence avec des dispositifs situés à proximité ;
- et qui, sans compromettre ni limiter les deux objectifs précédents, assure une interopérabilité avec tout type de tablette, par une liaison avec celle-ci opérée selon un protocole WiFi non modifié. En d'autres termes, le WiFi qui sera utilisé par la tablette doit rester un WiFi standard, non optimisé pour une longue distance, et en conservant la possibilité d'utiliser la tablette pour l'affichage des paramètres de vol et l'envoi de commandes par une action sur l'écran tactile, de la même façon que dans le cas d'un vol à vue, à courte portée.

On notera que, ici et dans la suite, on entendra par "longue portée" ou "longue distance", une portée hectométrique, c'est-à-dire de plusieurs centaines de mètres à plusieurs kilomètres, par opposition à une "courte distance" ou "courte portée" qui sera une portée centimétrique, de quelques centimètres ou dizaines de centimètres.

Pour atteindre les buts précités, l'invention propose un ensemble pour la transmission bidirectionnelle de données entre un équipement de télécommande et un drone distant, lesdites données comprenant des commandes de pilotage, des paramètres de vol et un flux video.

Cet ensemble comprend, de manière en elle-même connue et divulguée par le DE 10 2012 012 462 A1 précité :
- un drone comprenant : des circuits de pilotage ; une caméra video embarquée ; et un module émetteur-récepteur sans fil à longue portée, couplé aux circuits de pilotage et à la caméra video embarquée ;
- un dispositif portable de type tablette comprenant : un écran de visualisation ; un module logiciel comportant un module applicatif de pilotage du drone et de visualisation d'images ; et un module émetteur-récepteur sans fil à courte portée ; et
- une console de télécommande, comprenant : un support recevant la tablette ; un module émetteur-récepteur sans fil à courte portée, interfacé avec le module émetteur-récepteur sans fil à courte portée de la tablette ; un module émetteur-récepteur sans fil à longue portée, interfacé avec le module émetteur-récepteur sans fil à longue portée du drone ; et des manettes et boutons aptes à générer des commandes de vol en fonction d'actions exercées sur ces manettes et boutons,

De façon caractéristique de l'invention :
- la console comprend un module logiciel comportant un module de routage bidirectionnel d'échange desdites données, ce module de routage étant couplé aux modules émetteurs-récepteurs sans fil à courte portée et à longue portée ainsi qu'aux manettes et boutons ;
- le module émetteur-récepteur sans fil à courte portée de la console est interfacé avec le module émetteur-récepteur sans fil à courte portée de la tablette pour constituer un réseau local de tablette, à courte portée ;
- le module émetteur-récepteur sans fil à longue portée de la console est interfacé avec le module émetteur-récepteur sans fil à longue portée du drone pour constituer un réseau local de drone, à longue portée ;
- le réseau local de tablette à courte portée et le réseau local de drone à longue portée sont des réseaux sans fil distincts et opèrent sur des canaux non partagés ;
- le réseau local de tablette à courte portée est un réseau opérant selon un protocole standard non modifié, tandis que le réseau local de drone à longue portée est un réseau opérant selon un protocole dédié, non standard ; et
- lesdites données sont échangées : entre le drone et la tablette par l'intermédiaire du réseau local de tablette interfacé avec le réseau local de drone via le module de routage ; et entre les manettes et boutons et le drone par l'intermédiaire du réseau local de drone via le module de routage.

Le protocole dédié, non standard, du réseau local de drone à longue portée peut notamment être un protocole prévoyant un temps d'attente d'acquittement de réception de trame qui est supérieur à la valeur spécifiée par le protocole standard.

Dans une implémentation préférentielle, le module logiciel de la console comprend une série de couches logicielles comportant un premier noyau de système d'exploitation, une première surcouche de système d'exploitation, et une première couche applicative, contenant ledit module de routage. Le module logiciel de la tablette comprend également une série de couches logicielles comportant un second noyau de système d'exploitation, une seconde surcouche de système d'exploitation, et une seconde couche applicative, semblable à ladite première couche applicative du module logiciel de la console, mais ne contenant pas de module de routage actif.

Avantageusement, la seconde couche applicative du module logiciel de la tablette contient également un second module de routage, semblable audit premier module de routage du module logiciel de la console, mais ce module de routage est désactivé.

Selon diverses caractéristiques subsidiaires avantageuses :
- le réseau local de tablette à courte portée et le réseau local de drone à longue portée sont l'un et l'autre des réseaux selon IEEE 802.11 ;
- le module émetteur-récepteur sans fil à longue portée du drone est configuré en point d'accès AP et le module émetteur-récepteur sans fil à longue portée de la console est configuré en station mobile STA, et le module émetteur-récepteur sans fil à courte portée de la console est configuré en point d'accès AP et le module émetteur-récepteur sans fil à courte portée de la tablette est configuré en station mobile STA ;
- la console comprend en outre un système d'antenne omnidirectionnelle à courte portée couplé au module émetteur-récepteur sans fil à courte portée, et un système d'antenne directionnelle à longue portée couplé au module émetteur-récepteur sans fil à longue portée ;
- la console comprend en outre des afficheurs d'informations d'état du drone, ces informations d'état étant transmises du drone au module de routage de la console par l'intermédiaire du réseau local de drone, et le module de routage est apte à transmettre les informations d'état aux afficheurs de la console, pour visualisation au moyen de ces afficheurs, et à la tablette par l'intermédiaire du réseau local de tablette, pour visualisation sur l'écran de la tablette ;
- la console comprend en outre des moyens de couplage du module de routage à un équipement auxiliaire de visualisation et/ou d'entrée/sortie de données.

On va maintenant décrire un exemple de mise en oeuvre de l'ensemble de l'invention, en référence aux dessins annexés où les mêmes références désignent d'une figure à l'autre des éléments identiques ou fonctionnellement semblables.
La Figure 1 est une vue d'ensemble montrant les différents éléments de l'invention, avec le drone, la tablette et la console de télécommande.
La Figure 2 représente schématiquement une architecture réseau selon l'état de la technique, pour la télécommande d'un drone à longue distance.
La Figure 3 représente schématiquement une architecture réseau selon l'invention, pour la télécommande d'un drone à longue distance par une tablette.
La Figure 4 est une représentation sous forme de schéma par blocs des différents éléments fonctionnels présents dans la tablette, dans la console de télécommande et dans le drone pour la mise en oeuvre de l'architecture de l'invention.

Sur la Figure 1, la référence 10 désigne de façon générale un drone, par exemple un drone volant de type quadricoptère tel que le modèle *Bebop* de Parrot SA, Paris, France. Ce drone comporte quatre rotors coplanaires 12 dont les moteurs sont pilotés indépendamment par un système intégré de navigation et de contrôle d'attitude. Le drone comporte également une caméra 14 à visée frontale permettant d'obtenir une image de la scène vers laquelle se dirige le drone, par exemple une caméra grand-angle haute définition à capteur CMOS de résolution 1920 x 1080 pixels avec une fréquence de rafraichissement du flux video de 30 fps (image par seconde).

Le drone est piloté par un ensemble 16 comprenant une console de télécommande 20 associée à une tablette 18.

La tablette 18 est une tablette conventionnelle, par exemple de type *iPad* (marque déposée) ou analogue, comprenant un écran de visualisation 22, dans laquelle a été chargé un module logiciel applicatif de pilotage du drone 10 et de visualisation des images prises par la caméra embarquée 14. La tablette 18 est par ailleurs équipée d'une interface radio d'échange de données, par exemple de type WiFi. Il s'agit d'une tablette d'un modèle standard, non modifié si ce n'est le chargement du module logiciel applicatif.

L'écran 22 de la tablette 18 affiche l'image de la scène captée par la caméra embarquée du drone 14, avec en superposition un certain nombre de symboles permettant le contrôle de divers paramètres de navigation. Cet écran est un écran tactile permettant l'activation de commandes de pilotage par simple contact d'un doigt d'un opérateur sur les symboles affichés à l'écran (montée/descente, contrôle d'attitude, etc.). Ces actions sont interprétées par le logiciel applicatif qui les transforme en signaux de commande à destination du drone, envoyés sur l'interface WiFi d'échange de données. Inversement, les données de vol en provenance du drone reçues par l'interface WiFi sont délivrées au logiciel applicatif pour y être traitées et faire éventuellement l'objet d'un affichage sur l'écran 22 de la tablette.

La production de commandes à partir de l'écran tactile de la tablette ne sera toutefois utilisée ici qu'à titre subsidiaire, les différentes commandes étant dupliquées et complétées par des actions sur divers boutons et manettes de la console 20.

Plus précisément, la console 20 comporte un support 24 permettant de solidariser la tablette 18 à la console, face à l'opérateur de manière à ce que celui-ci puisse voir la totalité de la surface de l'écran 22. Le corps de la console 20 est prolongé de chaque côté par des poignées 26 pourvues de divers organes de commande tels que des manettes 28 de type "manche à balai" et des boutons 30 disposés à portée des doigts de l'opérateur et associés chacun à une commande particulière (décollage/atterrissage, retour au point de départ, déclenchement de l'enregistrement de la scène captée par la caméra, etc.). La console 20 est également munie de divers afficheurs lumineux 32 (niveau de la batterie du drone, enregistrement en cours, etc.), ainsi que d'une connectique (non représentée) permettant le branchement d'accessoires tels que par exemple des lunettes de réalité virtuelle à écran intégré utilisables en alternative à l'écran de visualisation 22 de la tablette.

La console 20 est également munie d'une antenne WiFi directive 34 directionnelle à longue portée, que l'opérateur dirige vers le drone lorsqu'il a entre ses mains la console de télécommande 20.

On a illustré sur la Figure 2, de façon schématique, une architecture conventionnelle permettant d'assurer une télécommande du drone 10 à longue distance.

Cette technique repose sur l'utilisation de deux liaisons radio différentes, l'une 36 pour l'échange des commandes et des données de vol avec le drone, l'autre 38, 38' pour la transmission du flux video.

Pour assurer une longue portée entre le drone 10 et la tablette 20 par la liaison WiFi de transmission du flux video, un répéteur WiFi 40 est placé dans le réseau local (LAN) WiFi incluant le drone 10 et la tablette 20. Le drone est en mode AP (point d'accès) et la tablette en mode STA (station) et le répéteur AP/STA est intercalé entre ces deux éléments du réseau local WiFi, le drone 10 et la tablette 20 échangeant des données sur un canal commun.

L'échange des commandes et des données de vol se fait par une liaison distincte 36 avec un appareil de télécommande 42, liaison établie de façon totalement indépendante du réseau local WiFi entre le drone 10 et la tablette 20 via le répéteur intercalaire 40.

Comme on l'a expliqué brièvement en introduction, cette architecture conventionnelle présente plusieurs inconvénients :
- en premier lieu, pour atteindre une portée élevée il est nécessaire de disposer d'une liaison radio robuste, avec des modulations simples, ce qui a pour corollaire un débit peu élevé. Lorsque le répéteur 40 est intercalé sur cette liaison, il partage temporellement le canal utilisé, ce qui a pour effet de limiter le débit de 50 %, aussi bien du côté de la tablette que du côté du drone ;
- en second lieu, le protocole de communication doit être optimisé, en particulier en augmentant le temps d'attente d'acquittement de réception de trame (*ACK timeout*) pour tenir compte de l'augmentation du temps de transmission des informations du fait de la longue distance. Il ne s'agit donc plus d'un protocole WiFi standard et, comme la modification de ces paramètres est effective pour les deux branches 38 (tablette/répéteur) et 38' (répéteur/drone) de la liaison, le WiFi que doit opérer la tablette n'est plus un WiFi standard et celle-ci doit être adaptée en conséquence ;
- en troisième lieu, pour atteindre une portée importante, il est nécessaire d'émettre un signal puissant vers le drone, ce que permet de faire le répéteur 40. Mais ce répéteur dialoguera alors sous cette forte puissance aussi bien avec le drone 10 qu'avec la tablette 20, introduisant un risque élevé de saturation du côté du signal reçu par la tablette.

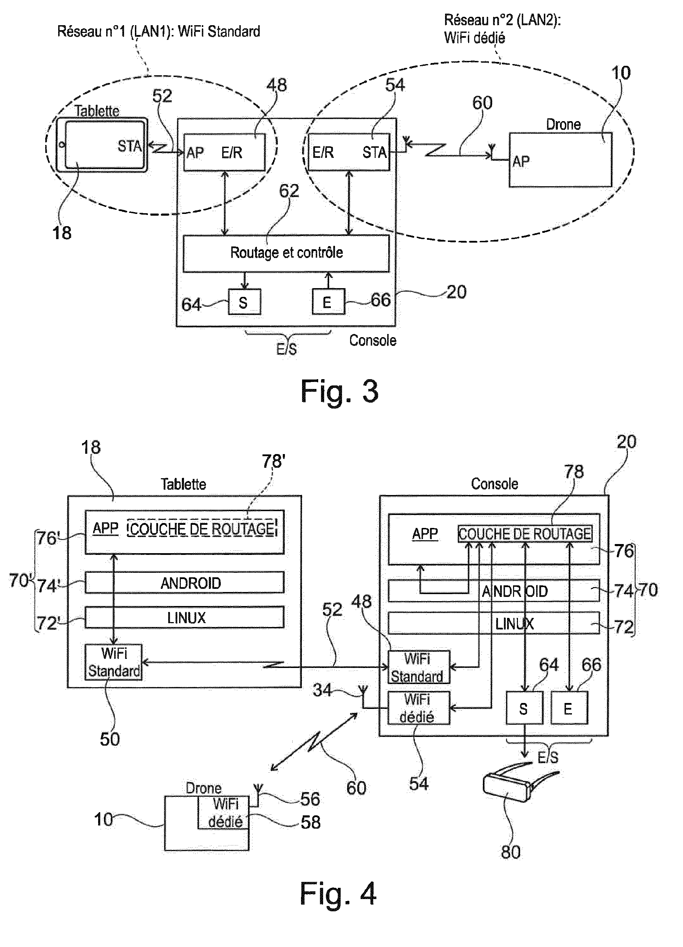

L'invention propose une architecture originale, illustrée schématiquement Figures 3 et 4, permettant de résoudre ces divers inconvénients.

Le principe de base de l'invention consiste à prévoir deux liaisons WiFi distinctes, et donc deux réseaux locaux WiFi distincts, l'un dédié au drone et l'autre dédié à la tablette.

Le premier réseau, LAN1, est un réseau local de tablette à courte portée, constitué directement entre un module émetteur/récepteur 48 intégré à la console 20 et le module émetteur/récepteur WiFi 50 (Figure 4), standard, de la tablette. Le module 48 de la console opère en point d'accès AP, et le module 50 de la tablette en station STA. La liaison WiFi 52 entre ces modules 48 et 50 est une liaison standard, non modifiée et l'émetteur du module 48 est un émetteur à faible puissance, du fait de la très grande proximité entre la console 20 et la tablette 18 qui est solidarisée à cette console.

Le second réseau, LAN2, est un réseau local de drone qui opère sur un canal différent de celui du réseau local de tablette LAN1.

Ce réseau est constitué entre un module émetteur/récepteur 54 de la console 20 et un module émetteur/récepteur 58 du drone. Le drone est configuré en point d'accès AP et le module 54 en station STA. La liaison WiFi 60 entre ces deux modules 54 et 58 est une liaison à longue distance, optimisée de manière à conserver le débit le plus élevé possible pour la transmission du flux video, tout en maximisant la portée.

On peut utiliser par exemple pour cette liaison WiFi 60 une liaison selon IEEE 802.11n de type bibande (2,4 GHz/5 GHz) et MIMO, avec côté console une antenne 34 formée de deux antennes patch bibande directionnelles avec dans la direction du lobe principal un gain de 8 dBi à 2,4 GHz et 12 dBi sur 5 GHz, l'émetteur/récepteur WiFi 54 étant capable de fournir jusqu'à 21 dBm à 5 GHz et 16 dBm à 2,4 GHz. Le rayonnement produit (en MIMO) est donc de 36 dBm à 5 GHz et 27 dBm à 2,4 GHz, ce qui permet de maximiser la portée tout en restant dans les limites règlementaires autorisées. Le drone 10 utilise quant à lui une antenne 56 constituée de deux dipôles bibande omnidirectionnels, le module WiFi 58 du drone pouvant fournir jusqu'à 21 dBm dans chacune des deux bandes.

On notera que la directivité de l'antenne permet aussi de mieux capter les signaux provenant du drone : le gain de l'antenne s'ajoute à la puissance émise par le drone, ce qui équilibre le bilan de liaison du système.

On notera également que le réseau longue portée LAN2 entre le drone 10 et la console 20 utilise côté console une puissance d'émission importante, mais appliquée des antennes très directives et orientées vers le drone, ce qui limite la puissance envoyée sur d'autres appareils WiFi éventuellement présents à proximité de la console 20 (téléphone portable de l'opérateur ou d'autres personnes à proximité, etc.).

De façon caractéristique de l'invention, les deux réseaux WiFi distincts LAN1 et LAN2 sont interfacés par un module 62 de routage et de contrôle intégré à la console 20.

Ce module de routage et de contrôle 62 est également interfacé avec des entrées/sorties 64, 66 de la console, permettant par exemple le branchement de lunettes de réalité virtuelle 80 (Figure 4) ou tout autre périphérique externe à interfacer avec le drone et/ou la tablette.

Lors de l'initialisation, le module 62 initialise les deux réseaux LAN1 et LAN2 de manière qu'ils ne fonctionnent jamais sur le même canal, évitant ainsi que ces deux réseaux LAN1 et LAN2 puissent se perturber. Les canaux WiFi choisis à ce stade sont de préférence les canaux détectés comme étant les moins encombrés, ce qui minimise le risque d'interférence avec d'autres appareils WiFi présents dans l'environnement de la console.

Le réseau longue portée LAN2 peut être configuré de façon non standard, avec un protocole de communication modifié pour tenir compte notamment des temps de propagation importants dus à la grande distance (jusqu'à 2 km) entre la console 20 et le drone 10. Il s'agit notamment d'augmenter la valeur du "ACK time out". En effet, si l'on utilisait la valeur du "ACK time out" prévue par la norme, compte tenu des temps de propagation des signaux il ne serait pas possible de dépasser une portée d'environ 500 m. L'allongement de cette valeur par un paramétrage non standard permet, précisément, de s'affranchir de cette limite et d'atteindre en pratique des portées largement supérieures au kilomètre.

Dans la mesure où les deux réseaux LAN1 et LAN2 sont des réseaux distincts, il n'y a aucune contrainte d'interopérabilité entre tablette et drone, et la liaison entre la console et le drone peut être optimisée au mieux, notamment avec des modulations radio simples.

En revanche, côté tablette, le WiFi du réseau courte portée LAN1 peut rester un WiFi standard, dans la mesure où il n'a pas besoin d'être optimisé pour une longue distance. La tablette peut ainsi être utilisée telle quelle, de même que d'autres périphériques connectés à la console par voie filaire via la connectique des entrées/sorties 64, 66.

Le fait de communiquer avec la tablette selon un protocole WiFi standard non modifié (donc non optimisé pour une longue distance) garantit l'interopérabilité avec tout type de tablette. De plus, il reste possible d'utiliser la tablette sans la console, pour un pilotage direct du drone en vol à vue à courte portée (quelques centaines de mètres au plus).

On notera d'autre part que, dans la mesure où les réseaux LAN1 et LAN2 sont des réseaux distincts qui opèrent sur des canaux différents, le débit courant des données entre la tablette 18 et la console 20 est sans aucune incidence sur le débit des données entre la console 20 et le drone 10, car aucun partage temporel d'un canal n'est nécessaire, à la différence des techniques mettant en oeuvre un répéteur comme celles exposées plus haut en référence à la Figure 2.

On notera que lors de la transmission des données entre le drone 10 et la console 20 un algorithme d'optimisation assure au sein du drone une régulation du débit de la video envoyée à la console. Il s'agit de privilégier la transmission des commandes et des données de vol sur le flux video, car ces commandes et données sont nécessaires pour assurer le contrôle permanent du vol. Un tel algorithme est décrit notamment dans le EP 2 450 862 A1 précité, auquel on pourra se reporter pour plus de détails.

On va maintenant décrire les aspects logiciels de l'architecture selon l'invention, en référence plus particulièrement à la Figure 4.

La console 20 comprend un module logiciel 70 avec un noyau de système d'exploitation 72, par exemple du type *Linux,* une surcouche d'interfaçage utilisateur 74, par exemple de type *Android,* et une couche applicative 76 spécifique. La couche applicative 76 comprend un logiciel APP de pilotage du drone et de visualisation des images, ainsi qu'une couche de routage 78, spécifique de l'invention, avantageusement incluse dans la couche applicative 76.

La couche de routage 78 est interfacée :
- avec le logiciel applicatif APP via la couche d'interfaçage utilisateur 74 ;
- avec les deux modules WiFi 48 et 54 pour l'échange des données respectivement avec la tablette 18 et avec le drone 10 ; - et avec les entrées/sorties 64, 66, celles-ci comprenant : les manettes et boutons 28, 30 intégrés à la console 20, les afficheurs 32 également intégrés à la console 20, et des périphériques externes, par exemple des lunettes de réalité virtuelle 80, connectables à la console par une liaison filaire et une prise appropriée ou bien une liaison sans fil propre (par exemple une liaison Bluetooth).

Cette couche de routage 78 assure ainsi l'échange des diverses données entre la tablette, le drone, les commandes, boutons et indicateurs de la console, ainsi qu'avec le logiciel applicatif de pilotage du drone et de visualisation des images implanté au sein de la console 20.

Du côté de la tablette 18, la configuration est comparable, avec un module logiciel 70' incluant, comme le module 70 de la console : un noyau de système d'exploitation 72', une couche d'interfaçage utilisateur 74' et une couche applicative 76', avantageusement la même que celui que celle, 76, incluse dans la console 20 - à la différence près que la couche de routage 78' est ici désactivée, puisqu'elle n'aura pas de fonction au sein de la tablette.

Au sein de la console, la couche de routage 78 est en revanche active, et elle est vue par le logiciel APP de pilotage et de visualisation comme un drone, c'est-à-dire que l'échange de données via cette couche de routage est transparent pour l'application APP, qui fonctionne de la même façon lorsqu'elle est intégrée à la console de télécommande 20 que si elle opérait de façon autonome, directement en liaison avec un drone selon la configuration conventionnelle à courte portée, sans console.

On va maintenant donner deux exemples de mise en oeuvre de l'architecture spécifique de l'invention que l'on vient de décrire.

Un premier exemple est celui de la transmission du flux video de la caméra embarquée par le drone.

Le drone transmet le flux video via le module WiFi 58 et la liaison 60 vers l'antenne directionnelle 34 de la console 20. Le flux video est reçu par le module WiFi dédié longue portée 54, d'où il est transféré à la couche de routage 78. La couche de routage envoie alors simultanément ce flux video vers le module WiFi standard courte portée 48 et, le cas échéant, vers des lunettes de réalité virtuelle 80 via la sortie 64. Côté tablette, le flux video est reçu par le module émetteur/récepteur 50 et transmis à la couche applicative 76' qui assure sa visualisation sur l'écran de la tablette via la couche d'interfaçage utilisateur 74'.

Un second exemple est celui d'une commande envoyée depuis la tablette, par exemple une commande "atterrir", ordonnée par appui sur un symbole affiché sur l'écran de la tablette.

Cette commande, traitée par le module applicatif 76', est transmise via les modules émetteurs/récepteurs 50 et 48 à la console 20 jusqu'à la couche de routage 78 (on notera que cette commande "atterrir" pourrait également être activée par appui sur un bouton dédié de la console, correspondant à une entrée 66 directement interfacée à la couche de routage 78). La commande est envoyée ensuite au drone via les modules émetteurs/récepteurs 54 et 58. La commande d'atterrissage est traitée au sein du drone qui prend les actions appropriées. Une fois qu'il a atterri, le drone envoie une donnée "Posé au sol" d'acquittement, émise par le module émetteur/récepteur 58 et reçue, côté console, par le module émetteur/récepteur 54. La donnée est envoyée à la couche de routage 78, qui met à jour l'état du drone dans le logiciel applicatif APP, et envoie un signal correspondant à la tablette via les modules émetteurs/récepteurs 48 et 50 jusqu'au module applicatif 76' de la tablette. Le module applicatif 16' met également à jour l'état du drone dans son logiciel applicatif APP, et une indication peut éventuellement être affichée à l'opérateur sur l'écran de la tablette.

## Revendications

1. Un ensemble pour la transmission bidirectionnelle de données entre un équipement de télécommande (16) et un drone (10) distant, lesdites données comprenant des commandes de pilotage, des paramètres de vol et un flux video, cet ensemble comportant :
- un drone (10) comprenant:
des circuits de pilotage ;
une caméra video embarquée (14) ; et
un module émetteur-récepteur sans fil à longue portée (58), couplé aux circuits de pilotage et à la caméra video embarquée ;
- un dispositif portable de type tablette (18) comprenant :
un écran de visualisation (22) ;
• un module logiciel (70') comportant un module applicatif (76') de pilotage du drone et de visualisation d'images ; et
• un module émetteur-récepteur sans fil à courte portée (50) ; et
- une console de télécommande (20), comprenant :
un support (24) recevant la tablette ;
un module émetteur-récepteur sans fil à courte portée (48), interfacé avec le module émetteur-récepteur sans fil à courte portée de la tablette (50) ;
un module émetteur-récepteur sans fil à longue portée (54), interfacé avec le module émetteur-récepteur sans fil à longue portée du drone (58) ; et
des manettes et boutons (28, 30) aptes à générer des commandes de vol en fonction d'actions exercées sur ces manettes et boutons,
cet ensemble étant ***caractérisé en ce que** :*
- la console (20) comprend un module logiciel (70) comportant un module de routage bidirectionnel (62 ; 78) d'échange desdites données, ce module de routage étant couplé aux modules émetteurs-récepteurs sans fil à courte portée (48) et à longue portée (54) ainsi qu'aux manettes et boutons (28, 30) ;
- le module émetteur-récepteur sans fil à courte portée (48) de la console (20) est interfacé avec le module émetteur-récepteur sans fil à courte portée de la tablette (50) pour constituer un réseau local de tablette, à courte portée (LAN1) ;
- le module émetteur-récepteur sans fil à longue portée (54) de la console (20) est interfacé avec le module émetteur-récepteur sans fil à longue portée du drone (58) pour constituer un réseau local de drone, à longue portée (LAN2) ;
- le réseau local de tablette à courte portée (LAN1) et le réseau local de drone à longue portée (LAN2) sont des réseaux sans fil distincts et opèrent sur des canaux non partagés ;
- le réseau local de tablette à courte portée (LAN1) est un réseau opérant selon un protocole standard non modifié, tandis que le réseau local de drone à longue portée (LAN2) est un réseau opérant selon un protocole dédié, non standard ; et
- lesdites données sont échangées :
entre le drone (10) et la tablette (18) par l'intermédiaire du réseau local de tablette (LAN1) interfacé avec le réseau local de drone (LAN2) via le module de routage (62 ; 78) ; et
entre les manettes et boutons (28, 30) et le drone (10) par l'intermédiaire du réseau local de drone (LAN2) via le module de routage (62 ; 78).

2. L'ensemble de la revendication 1, dans lequel le protocole dédié, non standard, du réseau local de drone à longue portée (LAN2) est un protocole prévoyant un temps d'attente d'acquittement de réception de trame qui est supérieur à la valeur spécifiée par le protocole standard.

3. L'ensemble de la revendication 1,
dans lequel le module logiciel de la console (70) comprend une série de couches logicielles comportant :
- un premier noyau de système d'exploitation (72) ;
- une première surcouche de système d'exploitation (74) ; et
- une première couche applicative (76), contenant ledit module de routage (78),
et dans lequel le module logiciel de la tablette (70') comprend également une série de couches logicielles comportant :
- un second noyau de système d'exploitation (72') ;
- une seconde surcouche de système d'exploitation (74') ; et
- une seconde couche applicative (76'), semblable à ladite première couche applicative (76) du module logiciel de la console, mais ne contenant pas de module de routage actif.

4. L'ensemble de la revendication 3, dans lequel la seconde couche applicative (76') du module logiciel de la tablette (70') contient également un second module de routage (78'), semblable audit premier module de routage (78) du module logiciel de la console, mais ce module de routage étant désactivé.

5. L'ensemble de la revendication 1, dans lequel le réseau local de tablette à courte portée (LAN1) et le réseau local de drone à longue portée (LAN2) sont l'un et l'autre des réseaux selon IEEE 802.11.

6. L'ensemble de la revendication 5, dans lequel :
- le module émetteur-récepteur sans fil à longue portée du drone (58) est configuré en point d'accès AP et le module émetteur-récepteur sans fil à longue portée de la console (54) est configuré en station mobile STA, et
- le module émetteur-récepteur sans fil à courte portée de la console (48) est configuré en point d'accès AP et le module émetteur-récepteur sans fil à courte portée de la tablette (50) est configuré en station mobile STA.

7. L'ensemble de la revendication 1, dans lequel la console comprend en outre :
- un système d'antenne omnidirectionnelle à courte portée couplé au module émetteur-récepteur sans fil à courte portée ; et
- un système d'antenne directionnelle à longue portée couplé au module émetteur-récepteur sans fil à longue portée.

8. L'ensemble de la revendication 1, dans lequel :
- la console comprend en outre des afficheurs (32) d'informations d'état du drone, ces informations d'état étant transmises du drone (10) au module de routage (62) de la console par l'intermédiaire du réseau local de drone (LAN2) ; et
- le module de routage (62) est apte à transmettre lesdites informations d'état :
aux afficheurs (32) de la console, pour visualisation au moyen de ces afficheurs, et
• à la tablette (18) par l'intermédiaire du réseau local de tablette (LAN1), pour visualisation sur l'écran (22) de la tablette.

9. L'ensemble de la revendication 1, dans lequel la console comprend en outre des moyens (64, 66) de couplage du module de routage à un équipement auxiliaire (80) de visualisation et/ou d'entrée/sortie de données.
